(19) Europäisches Patentamt / European Patent Office / Office européen des brevets

(11) **EP 3 910 872 A1**

(12) **EUROPEAN PATENT APPLICATION**

(43) Date of publication:
**17.11.2021 Bulletin 2021/46**

(51) Int Cl.:
*H04L 9/08* (2006.01)          *H04L 9/32* (2006.01)

(21) Application number: **20174890.2**

(22) Date of filing: **15.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Cysec SA**
**1015 Lausanne (CH)**

(72) Inventors:
 • **TRAVERSO, Giulia**
  **1015 Lausanne (CH)**
 • **FELK, Yacine**
  **1015 Lausanne (CH)**

 • **ROSCINO, Roberto**
  **1015 Lausanne (CH)**
 • **KARLOV, Alexandre**
  **1015 Lausanne (CH)**
 • **UPEGUI, Andres**
  **1202 Geneve (CH)**
 • **GANTEL, Laurent**
  **1202 Geneve (CH)**
 • **DUC, Alexandre**
  **1401 Yverdon-les-Bains (CH)**

(74) Representative: **KATZAROV S.A.**
**Geneva Business Center**
**12 Avenue des Morgines**
**1213 Petit-Lancy (CH)**

(54) **PARALLEL FRIENDLY VARIANT OF SPHINCS+ SIGNATURE ALGORITHM**

(57) The present relates to a method for computing a signature of a message (M) with a signature computing engine configured to execute a first function and a second function. The signature computing engine comprises a first hash computing engine used for the first function and a second hash computing engine used for the second function.

The method comprising the following steps :
i) in a first step, the first hash computing engine and the second hash computing engine execute the message (M) simultaneously so that the first function generates a randomness parameter (R) whereas the second function computes a hash of the message ($M_{hash}$), and
ii) in a second step, the second function uses the randomness parameter (R) and the hash of the message ($M_{hash}$) to generate the signature of the message (M).

The invention further relates to a system for executing the method according to the invention.

figure 2

## Description

## Technical Field

The present invention relates to a method for computing a signature of a message. The invention also concerns a system for executing a method according to the present invention.

## Background of the art

Society's economic growth across all sectors heavily relies nowadays on generating, transmitting, storing and processing digital data. The protection of digital data and their secure transmission has therefore become a major concern for both businesses and governments.

Cryptography is in charge for securing digital data. Digital signatures schemes protect the authenticity and integrity of data as well as guarantee non-repudiation of the signatures themselves. Digital signature schemes are therefore in dispensable for security on the Internet and are used to protect with this respect, for example, e-mails, software updates, financial transactions, military secrets. Digital signature schemes are a key player in the Transport Layer Security (TLS) protocol, which is used for secure data transfer and to create certificates in public-key infrastructure (PKI).

The security of digital signature schemes and, more in general, of cryptographic primitives relies on the hardness of mathematical problems, i.e. on the fact that there are certain mathematical problems that are intractable even for the most powerful computer currently available. Intractability (or hardness). In other words, it means that, although in principle solvable, it is impossible to find a solution to these problems in polynomial time.

Most signature schemes that are currently in use are considered secure as long as either the so called integer factorization problem or the discrete logarithm problem are computationally hard. The first construction of a digital signature scheme, called the RSA signature, was presented in 1978 by Rivest, Shamir, and Adleman. At present, no algorithms have yet been found to solve these problems on conventional computers in polynomial time.

However, in 1994, Shor presented an algorithm to solve the above mentioned mathematical problems in polynomial time using quantum computation, i.e. using qubits (quantum physical states) instead of regular bits. The existence of Shor's algorithm implies that all cryptographic schemes whose security is based on the hardness of the integer factorization problem or the discrete logarithm problem are considered broken as soon as large-scale quantum computers are invented.

In particular, Shors algorithm run on a sizeable quantum computer will break the RSA signature scheme and its more recent variants, which are the most widely used signature schemes.

The significant advances in the area of quantum computing of the past decade leaves no doubt about the fact that quantum computers are an actual threat to existing solutions of cryptography and digital signatures schemes.

Small-scale quantum computers already exist and at present, both research and industry are taking significant efforts to construct large-scale quantum computers for a good reason. It is reasonable to assume that within 20 years, quantum computers that are able to break the RSA scheme could exist

In order to maintain uninterrupted security on the Internet and the authenticity, integrity, and non-repudiation of data, it is important to prepare a secure transition from our current, classical PKI to cryptographic solutions that are secure even in the presence of a quantum attacker.

The term post-quantum cryptography refers to all those cryptographic primitives whose security is based on mathematical problems that are intractable even for large-scale quantum computers. Besides designing signature schemes that are provably secure against attacks run on quantum computers, it is crucial that, when brought into practice, the implementation of these post-quantum signature schemes are also resilient against physical attacks such as fault attacks and side-channel attacks.

Also, a key element for the adoption of such signature schemes by all current available applications is that their run-time and space are as efficient as their classical counterpart. That means that signatures should be both computed and verified fast and that their key and signature sizes is short. In particular, a relevant benchmark are the RSA signature schemes since not only they are efficient in terms of computational overload and storage space, but also because the vast majority of certificates used in PKI are generated using these signature schemes.

Therefore, there is a need to improve the standardization of post-quantum cryptography solutions, in particular the post-quantum signature schemes, by facilitating their hardware implementations. In particular, there is a need to optimize computation time to provide a faster signature computation to sign lengthy digital messages.

## Summary of the invention

The above problems are solved, at least partially, by the method and the system according to present invention.

The aim of the present invention is to provide a method and a system for signing a digital message in a faster manner.

The invention concerns a method for computing a signature of a message (M), the method comprising:

- providing a message (M) to be signed and configuring a signature computing engine to sign said message (M), the method being characterized in that the signature computing engine is configured to execute a first function and a second function, said signature computing engine comprises a first hash computing engine used for the first function and a second hash computing engine used for the second function, the method comprising the following steps :

i) in a first step, the first hash computing engine and the second hash computing engine execute the message (M) simultaneously so that the first function generates a randomness parameter (R) whereas the second function computes a hash of the message, and

ii) in a second step, the second function uses the randomness parameter (R) and the hash of the message to generate the signature of the message (M).

To sign a digital message, a computing engine requires at least computing two hash functions of the message: one hash function to compute the randomness parameter and another hash function to generate the signature.

In the present invention, both hashing steps are performed in parallel. the computing engine comprises a first hash computing engine and a second hash computing engine that are in charge of executing the two hashing functions in parallel, named respectively a first function and a second function.

The present invention comprises two steps, a first step followed by a second step. In the first step, both the first and second computing engines computed a hash of the message, but for different purposes. The first function computes a hash to generate the randomness parameter, whereas the second function computes a hash to be used to sign message.

In the second step, the first function is on hold. The second function uses the output of the first step of both first function and second function to sign the message: the randomness parameter R computed in the first step by the first function and the hash computed in the first step by the second function.

The overall time to generate a signature depends on the message hashing time, i.e. firstly on the time to hash the message to compute the randomness parameter and secondly on the time to hash and sign the message. Generally, in the existing solutions the two hashing processes (for the randomness parameter R and the signature) are performed successively, which means that the message must be streamed twice which extends the time required to have the message signed. On the contrary, in the present invention the message hashing time is halved since both hashing processes are performed in parallel, and preferably the two hashes are computed simultaneously. The present invention allows the message to be streamed only once. Therefore, there is no need to wait for the result of the first hashing process (to generate the randomness parameter R) to execute the second function which allow to save time in the signature generation process since both hashing operations are run in parallel.

In an embodiment, said first function and said second function are both started at the same time. In other words, the first function and the second function are executed simultaneously at least over a certain period which allows to save time during the signature process.

According to an embodiment, the present invention further comprises, in step i) a step for introducing a padding (M$_{padd}$) along the message (M) to be computed by the first hash computing engine and the second hash computing engine. Padding is advantageously introduced to avoid misalignment of the randomness parameter R with the boundary of input block of the hash computing engine (for instance SHA-256). The padding is introduced to ensure that message randomness R is always aligned with the n-bit boundary of the input block.

In an embodiment, the padding (M$_{padd}$) is defined as

$$M_{pad} = \begin{cases} \{\}, & \text{if } m \equiv 0 \pmod{256} \\ 1, & \text{if } m \equiv 1 \pmod{256} \\ 1 \| \{0\}^{(m \bmod 256)-1}, & \text{otherwise} \end{cases}$$

According to an embodiment, the size of the message M after introduction of the padding (M$_{padd}$) is defined as

$$m' = 256 \left\lceil \frac{m}{256} \right\rceil$$

m'

In an embodiment, the first function and the second function are pseudorandom functions. Pseudorandom functions are used to guarantee the security of the signature algorithm.

According to an embodiment, the first function is defined as

$$\mathsf{PRF}^{t}_{\mathbf{msg}}(\mathsf{SK}.\mathrm{prf}, \mathrm{optrand}, M) = \mathrm{HMAC\text{-}SHA\text{-}256}(\mathsf{SK}.\mathrm{prf} // \mathrm{optrand} // M // M_{pad}).$$

Wherein PRF means Pseudo Random Function, SK means Secret Key and SK.prf is part of the secret key SK, M means Message, HMAC-SHA-256 is the hash function.

In an embodiment, the second function further uses a seed such as a public key seed PK.seed, a public key root PK.root, and the message M whose signature is the one to be computed.

According to an embodiment, the second function is defined as

$$\mathsf{H}^{t}_{\mathbf{msg}}(R, \mathsf{PK}.\mathrm{seed}, \mathsf{PK}.\mathrm{root}, M) = \mathrm{MGF1\text{-}SHA\text{-}256}(\mathrm{SHA\text{-}256}(\mathsf{PK}.\mathrm{seed} // \mathsf{PK}.\mathrm{root} // M // M_{pad} // R),$$

$$mt)$$

In an embodiment, the message (M) to be signed is a message of at least one gigabyte. The present invention allows to speed up the signing of message of any size. However, the overall time to sign a message mainly depends on the message hashing time, said message hashing time depending on the size of the message (longer time required for large messages). Thus, the present invention is particularly suitable for large messages of at least one gigabits to save a tremendous amount of time compared to the existing solutions.

According to an embodiment, the method according to the present invention is executed on a device chosen among circuit devices such as reconfigurable circuit devices, for example a Field Reconfigurable Gate Array (FPGA), integrated circuit devices such as Application Specific Integrated circuit (ASIC).

In an embodiment, the message (M) to be signed is chosen among healthcare message such as genomic data, space related image message such as satellite images. Overall, the advantages of present invention are more significant when lengthy digital data have to be signed where the time saving signature is more visible. There are several practical use-cases where large quantities of data have to be signed and that would immensely benefit from having their authenticity and integrity protection guaranteed in the long- term, i.e. against quantum computers. In particular, two of the most prominent applications in need for such solutions are the healthcare (with medical records) and the space industry (with satellite images) even if the invention is not limited to these applications.

According to an embodiment, the method is used for signing at least a message (M) in a blockchain.

The claimed invention also relates to a system comprising a circuit device arranged for executing a method according to the present invention.

The particular advantages of the methods are similar to the ones of the device of the invention and will thus not be repeated here.

In an embodiment, the circuit device comprises two modules, a first module arranged for executing the first function, the second being arranged for executing the second function. For instance each module can comprise a computer process unit (CPU) as hash computing engine for running a function (the first or second function for example).

The embodiments describe for the method also apply to the system according to the present invention mutatis mutandis.

The present invention can comprise a single embodiment or a combination of embodiments.

**Brief description of the drawings**

Further particular advantages and features of the invention will become more apparent from the following non-limitative description of at least one embodiment of the invention which will refer to the accompanying drawings, wherein

- Figure 1 represents the overall time for signing a digital message using a first and second functions according to the prior art;
- Figure 2 represents the overall time for signing a digital message using a first and second functions according to an embodiment of the present invention;

**Detailed description of the invention**

The present detailed description is intended to illustrate the invention in a non-limitative manner since any feature of an embodiment may be combined with any other feature of a different embodiment in an advantageous manner.

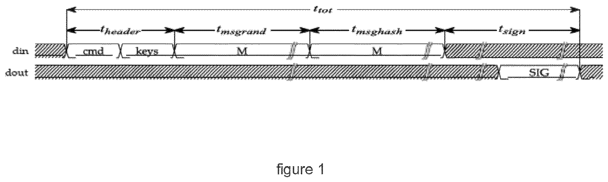

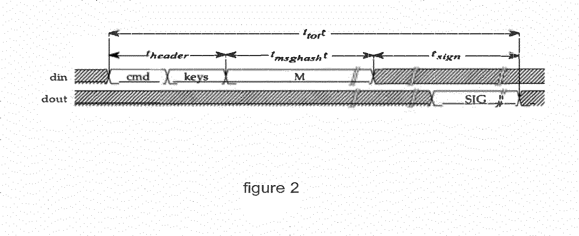

In the present example represented in figures 1 and 2, the method for signing a digital message uses SPHINCS+ as hash based signature scheme, the hash functions is SHA-256, the first and second functions are both pseudorandom functions. In this example, the method is executed in a Field Programmable Gate Array (FPGA). However, the invention is not limited to SPHINCS+, SHA-256, pseudorandom functions or FPGA.

In the present example illustrates on figures 1 and 2, the message to be signed is genomic data for instance.

Let us denote by $t_{tot}$ the entire time required from the start to the end of a signature computation for a message M. Time $t_{tot}$ is composed of $t_{header}$, $t_{msgrand}$, $t_{msghash}$ and $t_{sign}$, required, respectively:

- $t_{header}$ to stream the keys,

- $t_{msgrand}$ to generate the message randomness,

- $t_{msghash}$ to hash the message and

- $t_{sign}$ to compute the signature.

In this example, both $t_{header}$ and $t_{sign}$ are independent of the message size and, therefore, can be considered constant in time whereas, $t_{msghash}$ and $t_{msgrand}$ depend on the message size and are the most time consuming steps to sign the message. In other words, the time to generate the message randomness parameter R and the time to hash the message are in fact the operations needed to be run to sign a message that are affected by the fact that such message has to be streamed twice by using the existing solution or once, thanks to the present invention.

The figure 1 represents the entire time $t_{tot}$ where the first and second functions are defined respectively as

$$\mathbf{PRF_{msg}}(\mathbf{SK}.prf, optrand, M) = \text{HMAC-SHA-256}(\mathbf{SK}.prf // optrand // M),$$

$$\mathbf{H_{msg}}(\mathbf{R}, \mathbf{PK}.seed, \mathbf{PK}.root, M) = \text{MGF1-SHA-256}(\text{SHA-256}(R // \mathbf{PK}.seed // \mathbf{PK}.root // M), m),$$

where **R** is the output of $\mathbf{PRF_{msg}}$, i.e. $\mathbf{R} = \mathbf{PRF_{msg}}(\mathbf{SK}.prf, optrand, M)$.

The definition of the first and second functions represented on figure 1 implies that message randomness R must be known before the hashing of the message M starts, meaning that message M needs to be streamed twice: once to compute message randomness R through function PRFmsg and once to hash the message through function Hmsg. When signing large quantities of data, such as medical or spatial images, the performance of SPHINCS+ when it comes to generate a signature for all these data will be heavily affected by this double streamed process.

Figure 2 represents an alternative definition of functions $H_{msg}$ and $PRF_{msg}$, denoted by $H_{tmsg}$ and $PRF_{tmsg}$ as an example of the present invention that are defined as

$$\mathbf{PRF}^{t}_{\mathbf{msg}}(\mathbf{SK}.prf, optrand, M) = \text{HMAC-SHA-256}(\mathbf{SK}.prf // optrand // M // M_{pad}).$$

$$\mathbf{H}^{t}_{\mathbf{msg}}(R, \mathbf{PK}.seed, \mathbf{PK}.root, M) = \text{MGF1-SHA-256}(\text{SHA-256}(\mathbf{PK}.seed // \mathbf{PK}.root // M // M_{pad} // R), mt)$$

The difference between functions $H_{msg}$ and $H_{tmsg}$ and the difference between functions $PRF_{msg}$ and $PRF_{tmsg}$ (i.,e. the difference between the first and second according the the pior art and the furst and second function according to the example of the present invention) is in the position of message randomness R with respect to message M and in the introduction of a padding Mpad afterwards additional to the padding that both functions MGF1-SHA-256 and HMAC-SHA-256 inherently have.

Figure 2 represents the entire time to sign the message (same message as figure 1). The new total signature operation time $t_{tot}$ is still composed of the same $t_{header}$ and $t_{sign}$ terms, but the message random R and message hash operations are now performed in a new $t_{msghash}t$ term where both hashing operation are performed simultaneously.

Therefore, in the present example of the invention, the message hashing time is halved (i.e. divided by two) as the two hashes are now be computed simultaneously. As illustrated on figure 2, thanks to the new definition of the two functions denoted by $H_{tmsg}$ and $PRF_{tmsg}$, the present invention allows to significantly reduce the entire time required have the message signed compared to the existing solution.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

**Claims**

1. Method for computing a signature of a message (M), the method comprising:

   - providing a message (M) to be signed and configuring a signature computing engine to sign said message (M), the method being **characterized in that** the signature computing engine is configured to execute a first function and a second function, said signature computing engine comprises a first hash computing engine used for the first function and a second hash computing engine used for the second function, the method comprising the following steps :

      i) in a first step, the first hash computing engine and the second hash computing engine execute the message (M) simultaneously so that the first function generates a randomness parameter (R) whereas the second function computes a hash of the message ($M_{hash}$), and
      ii) in a second step, the second function uses the randomness parameter (R) and the hash of the message ($M_{hash}$) to generate the signature of the message (M).

2. Method according to claim 1, wherein said first function and said second function are both started at the same time.

3. Method according to any one of claim 1 or 2 further comprising, in step i) a step for introducing a padding ($M_{padd}$) along the message (M) to be computed by the first hash computing engine and the second hash computing engine.

4. Method according to the preceding claim, wherein the padding ($M_{padd}$) is defined as

$$M_{pad} = \begin{cases} \{\}, & \text{if } m \equiv 0 \ (\text{mod } 256) \\ 1, & \text{if } m \equiv 1 \ (\text{mod } 256) \\ 1 \| \{0\}^{(m \bmod 256)-1}, & \text{otherwise} \end{cases}$$

5. Method according to claim 3 or 4, wherein the size of the message M after introduction of the padding ($M_{padd}$) is defined as m'

$$m' = 256 \left\lceil \frac{m}{256} \right\rceil$$

6. Method according to any one of claims 1 to 5, wherein the first function and the second function are pseudorandom functions.

7. Method according to any one of claims 1 to 6, wherein the first function is defined as

$$\mathbf{PRF}^{t}_{\mathbf{msg}}(\mathbf{SK}.\mathrm{prf}, \mathrm{optrand}, M) = \mathrm{HMAC\text{-}SHA\text{-}256}(\mathbf{SK}.\mathrm{prf} \| \mathrm{optrand} \| M \| M_{pad}).$$

8. Method according to any one of claims 1 to 7, wherein the second function further uses a seed such as a public key seed PK Seed or a public key root PK Root, and the message M whose signature is the one to be computed.

9. Method according to any one of claims 1 to 8, wherein the second function is defined as

$$\mathbf{H}^t_{\mathbf{msg}}(R, \mathbf{PK}.\text{seed}, \mathbf{PK}.\text{root},M) = \text{MGF1-SHA-256(SHA-256}(\mathbf{PK}.\text{seed}\,/\!/\mathbf{PK}.\text{root}\,/\!/M\,/\!/M_{pad}\,/\!/\mathbf{R}), mt)$$

10. Method according to any one of claims 1 to 9, wherein the message (M) to be signed is a message of at least one gigabits.

11. Method according to any one of claims 1 to 10, wherein the method is executed on a device chosen among circuit devices such as reconfigurable circuit devices, for example a Field Programmable Gate Array (FPGA), integrated circuit devices such as Application Specific Integrated circuit (ASIC).

12. Method according to any one of claims 1 to 11, wherein the message (M) to be signed is chosen among healthcare message such as genomic data, space related image message such as satellite images.

13. Method according to any one of claims 1 to 12, wherein the method is used for signing at least a message (M) in a blockchain.

14. System for computing a signature of a message (M), the system comprising a circuit device arranged for executing a method according to any one of claims 1 to 13.

15. System according to claim 14, wherein the circuit device comprises two modules, a first module arranged for executing the first function, the second being arranged for executing the second function.

figure 1

figure 2

Europäisches
Patentamt

European
Patent Office

Office européen
des brevets

# EUROPEAN SEARCH REPORT

Application Number

EP 20 17 4890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/075000 A1 (CRYPTOGRAPHY RES INC [US]) 15 May 2014 (2014-05-15) * paragraphs [0042] - [0048] * * paragraph [0052] * * figures 2A,2B * ----- | 1-15 | INV. H04L9/08 H04L9/32 |
| X | JOSEFSSON SJD AB I LIUSVAARA INDEPENDENT S: "Edwards-curve Digital Signature Algorithm (EdDSA); draft-irtf-cfrg-eddsa-04.txt", EDWARDS-CURVE DIGITAL SIGNATURE ALGORITHM (EDDSA); DRAFT-IRTF-CFRG-EDDSA-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 March 2016 (2016-03-08), pages 1-52, XP015111587, [retrieved on 2016-03-08] * section 4 * * section 10.4 * ----- | 1-15 | |
| A | Trevor Perrin: "The XEdDSA and VXEdDSA Signature Schemes", , 20 October 2016 (2016-10-20), pages 1-14, XP055323146, Retrieved from the Internet: URL:https://whispersystems.org/docs/specifications/xeddsa/xeddsa.pdf [retrieved on 2016-11-25] * section 3 * ----- -/-- | 1-15 | TECHNICAL FIELDS SEARCHED (IPC) H04L |

The present search report has been drawn up for all claims

| Place of search | Date of completion of the search | Examiner |
|---|---|---|
| Munich | 14 September 2020 | Yamajako-Anzala, A |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Jean-Philippe Aumasson ET AL: "SPHINCS + Submission to the NIST post-quantum project Contents", , 14 March 2019 (2019-03-14), XP055722387, Retrieved from the Internet: URL:http://sphincs.org/data/sphincs+-round 2-specification.pdf * the whole document * | 1-15 | |
| A | Dan / Bernstein ET AL: "Failures in NIST's ECC standards, part 2", Public Comments Received on Draft NIST SP 800-186: Recommendations for Discrete Logarithm-Based Cryptography: Elliptic Curve Domain Parameters, 30 January 2020 (2020-01-30), XP055723047, Retrieved from the Internet: URL:https://csrc.nist.gov/CSRC/media/Publi cations/sp/800-186/draft/documents/sp800-1 86-draft-comments-received.pdf [retrieved on 2020-08-17] * section 2.5 * | 1-15 | |

TECHNICAL FIELDS
SEARCHED      (IPC)

The present search report has been drawn up for all claims

| Place of search | Date of completion of the search | Examiner |
|---|---|---|
| Munich | 14 September 2020 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 4890

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2020

| Patent document cited in search report | Publication date | Patent family member(s) | Publication date |
|---|---|---|---|
| WO 2014075000 A1 | 15-05-2014 | EP 2918037 A1<br>JP 6366595 B2<br>JP 2015534419 A<br>US 2015288524 A1<br>WO 2014075000 A1 | 16-09-2015<br>01-08-2018<br>26-11-2015<br>08-10-2015<br>15-05-2014 |

EPO FORM P0459

For more details about this annex : see Official Journal of the European Patent Office, No. 12/82